# EUROPEAN PATENT SPECIFICATION

(11) **EP 0 675 077 B1**
(45) Date of publication and mention of the grant of the patent: **03.02.1999**
(21) Application number: 95301418.0
(22) Date of filing: 06.03.1995
(51) Int. Cl.: C01B 33/037, C01B 33/107, C07F 7/16, C01G 49/10, C01F 7/56, C01F 11/24

(54) **Method for recovering metal chlorides from silicon or ferrosilicon alloys which have been reacted with chlorinating agents**
Verfahren zur Rückgewinnung von Metallchloriden aus Silicium oder Ferrosiliciumlegierungen, die mit Chlorierungsmitteln reagiert haben
Procédé de récupération de chlorures de métaux de silicium ou d'alliages ferrosilicium que ont réagi avec des agents chlorurants

(30) Priority: 30.03.1994 NO 941175
(43) Date of publication of application: 04.10.1995
(73) Proprietor: Elkem ASA, 0377 Oslo (NO)
(72) Inventor: Andersen, Einar, N-4624 Kristiansand (NO); Ceccaroli, Bruno, N-4622 Kristiansand (NO); Gundersen, Roald, N-4700 Vennesla (NO)
(74) Representative: Rees, David Christopher

(56) References cited:
- DE-B- 1 091 590
- FR-A- 2 091 127
- CHEMICAL ABSTRACTS, vol. 101, no. 18, 29 October 1984 Columbus, Ohio, US; abstract no. 156215p, page 256; & JP-A-05 976 877 (SOLEX RESEARCH CORP. OF JAPAN) 2 May 1984
- CHEMICAL ABSTRACTS, vol. 102, no. 14, 8 April 1985 Columbus, Ohio, US; abstract no. 118166m, page 295; & JP-A-59 219 471 (SOLEX RESEARCH CORP. OF JAPAN) 10 December 1984
- CHEMICAL ABSTRACTS, vol. 110, no. 24, 12 June 1989 Columbus, Ohio, US; abstract no. 216694s, page 251; & KOMPLEKSN. ISPOLZ. MINER. SYRYA, vol. 12, 1988 pages 57-60, V. I. POGORELOV ET AL.

## Description

The present invention relates to a method for recovering metal chlorides from silicon and ferrosilicon alloys which have been reacted with chlorinating agents.

By the reaction of particulate ferrosilicon containing about 90-96% by weight of silicon with a leaching solution containing FeCl₃/HCl, pure granular silicon is produced and metallic impurities in the raw materials, mainly Fe, Al and Ca are dissolved in the leach solution. This process for producing pure silicon is described in US patent No. 3,809,548. The leach solution from this process which contains a large amount of dissolved metal chlorides, particularly Fe, Al and Ca chloride, has up till now been disposed of. However, due to environmental reasons, it will no longer be acceptable to dispose of these kinds of metal chloride-containing leach liquors.

The same kind of metal chloride containing-leach liquors can be produced from the residues from other processes. Thus, by the reaction of ground or lumpy silicon or ferrosilicon with chlorine gas or gaseous HCl in reactors for the production of chlorosilanes, preferably trichlorosilane or tetrachlorosilane, impurities contained in the silicon or the ferrosilicon raw material, mainly Fe, Al and Ca are accumulated mainly as chlorides in silicon-containing residues in the reactors. These residues, which mostly contain residual silicon or silicon alloys, together with the above mentioned metal chlorides and carbon, have so far also been disposed of. However, for environmental reasons, it will no longer be acceptable to dispose of these residues on normal disposal sites. These residues can, however, be leached by FeCl₃/HCl solutions to produce a valuable silicon containing material and a leach solution containing metal chlorides. The silicon containing material can be used as a silicon source in different metallurgical processes.

Finally, a metal chloride containing residue is produced by the reaction of silicon powder with alkylchloride, particularly methylchloride for producing alkylchlorosilanes. In this process copper or a copper compound is used as a catalyst. Also in this process, silicon based residues are produced which contain metal chlorides originating from impurities in the materials. The residue will, in addition, contain copper and copper compounds originating from the catalyst. It is known to recover copper values from this residue by subjecting the residue to a leaching process using mineral acids, particularly HCl, whereby copper and most of the metal chlorides are dissolved and where copper is recovered from the leach solution by, for example, cementation. The leach solution after copper has been removed does, however, contain a number of dissolved metal chlorides, such as Fe and Al.

Moreover it is known from CA 102, 14,1985, 118116m, that iron values may be recovered from HCl containing waste liquids. The known process involves an oxidation step so to convert the iron content into iron-III-chloride, transferring the said iron chloride into an organic phase containing tributyl phosphate and stripping the iron chloride from the organic phase using water.

It is an object of the present invention to provide a method for treating the above-mentioned metal chloride containing residues and leach solutions in order to recover iron chloride, aluminium chloride and at least a part of any calcium chloride present in the form of valuable products and to obtain a final solution having a very small volume compared to the starting solution.

Accordingly, the present invention provides a method for recovering iron chloride, aluminium chloride and/or calcium chloride from materials in the form of silicon and ferrosilicon or from residues which contain silicon and/or ferrosilicon and metal chlorides and optionally copper and/or copper compounds, in which the materials are leached with HCl or HCl + FeCl₃/FeCl₂ solutions, and thereafter the solid silicon or ferrosilicon residue is removed from the leach solution and any copper is removed from the leach solution, characterised by the steps of: oxidising Fe²⁺ in the leach solution to Fe³⁺; subjecting the leach solution to a liquid-liquid extraction by means of an organic phase containing n-tributyl phosphate dissolved in a hydrocarbon solvent, in order to extract FeCl₃ and at least a part of any CaCl₂ from the leach solution; stripping FeCl₃ and any CaCl₂ from the organic phase using water, concentrating the remaining solution by evaporation and adding HCl gas to the solution in order to precipitate AlCl₃.6H₂O selectively from the solution; and recovering AlCl₃.6H₂O from the solution by filtration.

Preferably, the oxidation step is carried out by treatment with hydrochloric acid and chlorine gas. Preferably, the liquid-liquid extraction is conducted in a plurality of mixer-settler stages operating under counter-current flow conditions.

By the present invention, the Fe and at least a part of the Ca are recovered in the form of a FeCl₃-solution having a high Fe-concentration. The FeCl₃ solution obtained generally has a Fe³⁺ concentration of above 100g/l. The FeCl₃ solution can be used for example in municipal sewage treatment plants as a flocculating agent. It has been found that better results can be obtained by using a FeCl₃ solution containing some CaCl₂ as a flocculating agent rather than by using a pure FeCl₃ solution.

The AlCl₃.6H₂O is washed with water and preferably dissolved in water or in HCl in order to obtain AlCl₃ solutions which can be used for example in municipal sewage treatment plants as a flocculating agent.

The residual solution after removal of Fe and Al has generally a total iron content of less than 5 g/l and an aluminium content of less than 5 g/l. The volume of this residual solution is very small compared to the volume of the starting solution, and may if it is further concentrated by evaporation have a volume which is less than 10% of the volume of the starting solution. This residual solution can in most instances be deposited after having been neutralised.

The present invention may be carried into practice in various ways and some embodiments will now be described in the following examples.

### EXAMPLE 1

A leach solution from a process for leaching of metallurgical grade, 93.5% ferrosilicon with a HCl + FeCl₃ solution had the following composition:
- Fe³⁺ :: <1 g/l
- Fe²⁺ :: 85 g/l
- Al³⁺ :: 45 g/l
- Ca²⁺ :: 12 g/l
- HCl :: 35 g/l

Fe²⁺ in this solution was oxidised to Fe³⁺ by adding HCl and using chlorine gas. The oxidised solution had the following composition:
- Fe³⁺ :: 85 g/l
- Fe²⁺ :: <1 g/l
- Al³⁺ :: 45 g/l
- Ca²⁺ :: 12 g/l
- HCl :: 60 g/l

The oxidised solution was mixed with an organic phase comprising 40% n-tributyl phosphate (TBP) dissolved in an aromatic hydrocarbon solvent in order to extract Fe³⁺ and a part of Ca²⁺ from the leach solution. The extraction was carried out in four mixer-settler stages operated with counter-current flow. Fe³⁺ extracted to the organic phase was thereafter stripped by contacting the organic phase with water in four mixer-settler stages with counter-current flow. An aqueous Fe³⁺ solution was thus obtained, containing 110 g/l Fe³⁺ and 10 g/l Ca²⁺. The Fe³⁺ solution obtained can be used for example in municipal sewage treatment plants as a flocculating agent.

The raffinate from the extraction step had the following composition:
- Fe³⁺ :: <2 g/l
- Fe²⁺ :: <1 g/l
- Al³⁺ :: 45 g/l
- Ca²⁺ :: 4 g/l
- HCl :: 15 g/l

This solution was subjected to evaporation and HCl gas was added in order to precipitate aluminium in the form of aluminium chloride hexahydrate which thereafter was filtered from the solution and washed with water. The aluminium chloride hexahydrate crystals had the following composition:
- Fe total :: <0,01 grams pr. kg AlCl₃.6H₂O
- Al :: 95 grams pr. kg AlCl₃.6H₂O

The aluminium chloride hexahydrate crystals can be dissolved in water and used for example in municipal sewage treatment plants as a flocculating agent.

The residual solution after precipitation of aluminium had the following composition:
- Fe total :: <2 g/l
- Al³⁺ :: <2 g/l
- Ca²⁺ :: 4 g/l
- HCl :: 390 g/l

This residual solution can either be disposed of after recovering HCl or it can be further purified.

### EXAMPLE 2

Silicon-containing residue from a process where 96% silicon has been reacted with HCl gas at elevated temperature, was leached with a solution containing hydrochloric acid, aluminium chloride and FeCl₃/FeCl₂. The composition of the acid after leaching was as follows:
- Fe³⁺ :: <1 g/l
- Fe²⁺ :: 80 g/l
- Al³⁺ :: 45 g/l
- HCl :: 15 g/l

Hydrochloric acid and chlorine gas was added to the solution to oxidise ferrous chloride to ferric chloride. The oxidised solution had the following composition:
- Fe³⁺ :: 80 g/l
- Fe²⁺ :: <1 g/l
- Al³⁺ :: 45 g/l
- HCl :: 60 g/l

This solution was mixed with an organic phase comprising 40% n-tributylphosphate (TBP) in an aromatic hydrocarbon solvent in order to extract Fe³⁺ from the solution. The extraction was carried out in four mixer-settler stages operated with counter-current flow. Fe³⁺ extracted to the organic phase was thereafter stripped by contacting the organic phase with water. An aqueous Fe³⁺ solution was thus obtained, containing 110 g/l Fe³⁺. The Fe³⁺ solution obtained can be used for example in municipal sewage treatment plants as a flocculating agent.

The raffinate from the extraction step had the following solution:
- Fe³⁺ :: <2 g/l
- Fe²⁺ :: <1 g/l
- Al³⁺ :: 45 g/l
- HCl :: 15 g/l

This solution was subjected to evaporation and HCl gas was added in order to precipitate aluminium in the form of aluminium chloride hexahydrate which thereafter was filtered from the solution and washed with water.

The aluminium chloride hexahydrate crystals can be dissolved in water and used for example in municipal sewage treatment plants as a flocculating agent.

The residual solution after precipitation of aluminium had the following composition:
- Fe total :: <2 g/l
- Al³⁺ :: <2 g/l
- HCl :: 380 g/l

This residual solution can either be disposed of or can be further purified.

### EXAMPLE 3

Silicon-containing residue from a process where metallurgical grade silicon metal has been reacted with methylchloride in the presence of a copper catalyst was leached with a solution containing hydrochloric acid, aluminium chloride and FeCl₃/FeCl₂. The composition of the acid after leaching had the following composition:
- Fe³⁺ :: <1 g/l
- Fe²⁺ :: 65 g/l
- Cu²⁺ and Cu⁺ :: 15 g/l
- Al³⁺ :: 45 g/l
- HCl :: 15 g/l

The copper in the solution was removed from the solution by cementation on iron. After adding iron to the solution the cemented copper and any residual elemental iron was filtered from the solution. The filtrate had the following composition:
- Fe³⁺ :: <1 g/l
- Fe²⁺ :: 80 g/l
- Cu²⁺ and Cu⁺ :: <0.1 g/l
- Al³⁺ :: 45 g/l
- HCl :: 15 g/l

Hydrochloric acid and chlorine gas was added to the solution to oxidise ferrous chloride to ferric chloride. The oxidised solution had the following composition:
- Fe³⁺ :: 80 g/l
- Fe²⁺ :: <1 g/l
- Cu²⁺ :: <0.1 g/l
- Al³⁺ :: 45 g/l
- HCl :: 60 g/l

This solution was mixed with an organic phase comprising 40% n-tributyl phosphate (TBP) in an aromatic hydrocarbon solvent in order to extract Fe³⁺ from the solution.

The extraction was carried out in four mixer-settler stages operated with counter-current flow. Fe³⁺ extracted to the organic phase was thereafter stripped by contacting the organic phase with water. An aqueous Fe³⁺ solution was thus obtained containing 110 g/l Fe³⁺. The Fe³⁺ solution obtained can be used for example in sewage treatment plants as a flocculating agent.

The raffinate from the extraction step had the following composition:
- Fe³⁺ :: <2 g/l
- Fe²⁺ :: <1 g/l
- Cu²⁺ :: <0.1 g/l
- Al³⁺ :: 45 g/l
- HCl :: 15 g/l

The solution was then subjected to evaporation and HCl gas was added in order to precipitate aluminium in the form of aluminiumchloride hexahydrate which thereafter was filtered from the solution and washed with water.

The aluminiumchloride hexahydrate crystals can be dissolved in water and used for example in municipal sewage treatment plants as a flocculating agent.

The residual solution after precipitation of aluminium had the following composition:
- Fe total :: <2 g/l
- Cu²⁺ :: <0.1 g/l
- Al³⁺ :: <2 g/l
- HCl :: 380 g/l

This residual solution can either be disposed of or can be further purified.

## Claims

1. A method for recovering iron chloride, aluminium chloride and/or calcium chloride from materials in the form of silicon and ferrosilicon or from residues which contain silicon and/or ferrosilicon and metal chlorides and optionally copper and/or copper compounds, in which the materials are leached with HCl or HCl + FeCl₃/FeCl₂ solutions, and thereafter the solid silicon or ferrosilicon residue is removed from the leach solution and any copper is removed from the leach solution, characterised by the steps of: oxidising Fe²⁺ in the leach solution to Fe³⁺; subjecting the leach solution to a liquid-liquid extraction by means of an organic phase containing n-tributyl phosphate dissolved in a hydrocarbon solvent, in order to extract FeCl₃ and at least a part of any CaCl₂ from the leach solution; stripping FeCl₃ and any CaCl₂ from the organic phase using water, concentrating the remaining solution by evaporation and adding HCl gas to the solution in order to precipitate AlCl₃.6H₂O selectively from the solution; and recovering AlCl₃.6H₂O from the solution by filtration.

2. A method as claimed in Claim 1, characterised in that the oxidation step is carried out by treatment with hydrochloric acid and chlorine gas.

3. A method as claimed in Claim 1 or Claim 2, characterised in that the liquid-liquid extraction is conducted in a plurality of mixer-settler stages operating under counter-current flow conditions.

4. A method as claimed in any of Claims 1 to 3, characterised in that the Fe³⁺ solution produced in the stripping step has a Fe³⁺ content of at least 100 g/l.

5. A method as claimed in any of Claims 1 to 4, characterised in that the AlCl₃.6H₂O produced is dissolved in water or an HCl-solution to produce an AlCl₃-solution.

## Patentansprüche

1. Verfahren zur Wedergewinnung von Eisenchlorid, Aluminiumchlorid und/oder Calciumchlorid aus Materialien, die in Form von Silicium und Ferrosilicium vorliegen, oder aus Rückständen, die Silicium- und/oder Ferrosilicium und Metallchloride und gegebenenfalls Kupfer und/oder Kupferverbindungen enthalten,
wobei die Materialien mit HCl oder mit HCl und FeCl₃/FeCl₂- Lösungen extrahiert werden und danach der feste Silicium- oder Ferrosilicium-Rückstand sowie das gesamte Kupfer aus der Extraktionslösung entfernt werden,
dadurch gekennzeichnet, daß es folgende Stufen umfaßt:
Oxidation von Fe²⁺ zu Fe³⁺ in der Extraktionslösung;
Flüssig-Flüssig-Extraktion der Extraktionslösung mit einer organischen Phase, die eine Lösung von n-Tributylphosphat in einem Kohlenwasserstofflösungsmittel enthält, um FeCl₃ und mindestens einen Teil des CaCl₂ aus der Extraktionslösung zu extrahieren;
Abtreiben von FeCl₃ und CaCl₂ aus der organischen Phase mit Wasser, Einengen der restlichen Lösung durch Eindampfen und Einleiten von HCl-Gas in die Lösung, um AlCl₃ · 6H₂O selektiv aus der Lösung auszufällen und durch Filtration zu isolieren.

2. Verfahren nach Anspruch 1, dadurch gekennzeichnet, daß die Oxidationsstufe durch Behandlung mit Salzsäure und Chlorgas durchgeführt wird.

3. Verfahren nach Anspruch 1 oder 2, dadurch gekennzeichnet, daß die Flüssig-Flüssig-Extraktion in einer Vielzahl von Mischer-Abscheider-Stufen, die unter Gegenstrombedingungen arbeiten, durchgeführt wird.

4. Verfahren nach einem der Ansprüche 1-3, dadurch gekennzeichnet, daß die in der Abtreibestufe gebildete Fe³⁺-Lösung einen Fe³⁺-Gehalt von mindestens 100 g/l aufweist.

5. Verfahren nach einem der Ansprüche 1-4, dadurch gekennzeichnet, daß das gebildete AlCl₃ · 6H₂O in Wasser oder einer HCl-Lösung zu einer AlCl₃₋Lösung gelöst wird.

## Revendications

1. Procédé pour récupérer le chlorure de fer, le chlorure d'aluminium et/ou le chlorure de calcium à partir de matériaux sous forme de silicium ou de ferro-silicium ou à partir de résidus qui contiennent du silicium et/ou du ferro-silicium et des chlorures métalliques, et facultativement du cuivre et/ou des composés de cuivre, dans lequel on lessive les matériaux avec HCl ou les solutions d'HCl + FeCl₃/FeCl₂, puis on retire de la solution de lessivage le résidu de silicium ou de ferro-silicium solide et on retire de la solution de lessivage le cuivre éventuellement présent,
caractérisé par
les étapes de : oxydation de Fe²⁺ dans la solution de lessivage en Fe³⁺, soumission de la solution de lessivage à une extraction liquide-liquide au moyen d'une phase organique contenant du phosphate de n-tributyle dissous dans un solvant hydrocarboné, afin d'extraire FeCl₃ et au moins une partie du CaCl₂ éventuellement présent dans la solution de lessivage; élimination de FeCl₃ et du CaCl₂ éventuellement présent de la phase organique en utilisant de l'eau, concentration de la solution restante par évaporation et addition de gaz chlorhydrique à la solution afin de précipiter sélectivement AlCl₃.6H₂O à partir de la solution ; et récupération d'AlCl₃.6H₂O à partir de la solution par filtration.

2. Procédé selon la revendication 1,
caractérisé en ce qu'
on conduit l'étape d'oxydation par traitement avec de l'acide chlorhydrique et du chlore gazeux.

3. Procédé selon la revendication 1 ou la revendication 2,
caractérisé en ce qu'
on conduit l'extraction liquide-liquide en plusieurs étapes de mélange-décantation fonctionnant dans des conditions d'écoulement à contre-courant.

4. Procédé selon l'une quelconque des revendications 1 à 3,
caractérisé en ce que
la solution de Fe³⁺ produite dans l'étape d'élimination a une teneur en Fe³⁺ d'au moins 100 g/l.

5. Procédé selon l'une quelconque des revendications 1 à 4,
caractérisé en ce qu'
on dissout l'AlCl₃.6H₂O produit dans de l'eau ou une solution d'HCl afin de produire une solution d'AlCl₃.
